# EUROPEAN PATENT SPECIFICATION

(11) **EP 3 355 616 B1**
(45) Date of publication and mention of the grant of the patent: **30.06.2021**
(21) Application number: 18162550.0
(22) Date of filing: 16.07.2013
(51) Int. Cl.: H04W 36/02

(54) **APPARATUS AND METHOD FOR A MOBILE COMMUNICATION SYSTEM INCLUDING COOPERATING BASE STATIONS**
VORRICHTUNG UND VERFAHREN FÜR EIN MOBILKOMMUNIKATIONSSYSTEM MIT KOOPERIERENDEN BASISSTATIONEN
APPAREIL ET PROCÉDÉ POUR UN SYSTÈME DE COMMUNICATION MOBILE COMPRENANT DES STATIONS DE BASE COOPÉRANTES

(30) Priority: 23.07.2012 KR 20120080023
(43) Date of publication of application: 01.08.2018
(62) Divisional of application: 13823225.1
(73) Proprietor: Samsung Electronics Co., Ltd., Gyeonggi-do 16677 (KR)
(72) Inventor: Son, Yeong-Moon, Suwon-si, Gyeonggi-do 16677 (KR); Kang, Hyun-Jeong, Suwon-si, Gyeonggi-do 16677 (KR); Taori, Rakesh, Suwon-si, Gyeonggi-do 16677 (KR); Park, Jung-Shin, Suwon-si, Gyeonggi-do 16677 (KR); Chang, Young-Bin, Suwon-si, Gyeonggi-do 16677 (KR)
(74) Representative: Nederlandsch Octrooibureau

(56) References cited:
- EP-A1- 2 466 963
- US-A1- 2008 310 367
- US-A1- 2009 088 161
- US-A1- 2010 003 981

## Description

### Technical Field

The present disclosure relates to an apparatus and method for a mobile communication system including cooperating base stations. The invention relates to a master base station, to a cloud cell member base station and to a mobile station for use in such a system, and to methods employing such stations.

### Background Art

Mobile communication systems have evolved to provide various high-speed large-capacity services to Mobile Stations (MSs). Examples of a mobile communication system include a High Speed Downlink Packet Access (HSDPA) mobile communication system, a High Speed Uplink Packet Access (HSUPA) mobile communication system, a Long-Term Evolution (LTE) mobile communication system, an LTE-Advanced (LTE-A) mobile communication system, a High Rate Packet Data (HRPD) mobile communication system proposed in a 3rd Generation Project Partnership 2 (3GPP2), and an Institute of Electrical and Electronics Engineers (IEEE) 802.16m mobile communication system.

Generally, in a mobile communication system, a handover procedure is performed if an MS moves from one service area to another service area. If the handover procedure is performed, a context for the MS is forwarded from a serving Base Station (BS) to a target BS so that the target BS is able to provide continuous service to the MS based on the context for the MS which has been forwarded from the serving BS. The context is classified into a static context and a dynamic context, each of which will be described.

Firstly, the static context includes total configuration information related to the MS such as capability information, service flow & Quality of Service (QoS) information, etc. and does not change although the handover procedure is performed.

Secondly, the dynamic context indicates information which is exchanged between BSs for status information synchronization for the MS, and includes counter information, timer information, state machines status information, data buffer contents, etc.

If data which the MS should receive is buffering on a buffer of a serving BS, the data which the serving BS is buffering is forwarded to a target BS while the MS performs a handover procedure.

For convenience, 'data which an MS should receive' will be referred to as 'MS receiving schedule data'. Thereafter, if the MS finally accesses the target BS according to completion of the handover procedure, the target BS starts to transmit the forwarded MS receiving schedule data to the MS.

In an LTE mobile communication system as a typical mobile communication system, if a handover procedure of an MS begins, a serving BS forwards MS receiving data which is forwarded through a Packet Data Network (PDN) gateway to a target BS through a link which is established with the target BS. In this data forwarding method, while a network signaling is ongoing, the MS may resume receiving data although the MS accesses the target BS in a state in which a path between the target BS and the PDN gateway is not yet established. Inter base station handovers are for example described in EP 2466963 A1 and in US 2010/003981 A1.

Recently, a cloud cell communication system in which a plurality of BSs provide a service to an MS by cooperating with one another, that is, the plurality of BSs provide the service to the MS using a multiple BS cooperation scheme, has been proposed.

The same handover procedure may occur in the cloud cell communication system, so it is important for the total system performance of the cloud cell communication system that the cloud cell communication system continuously provides a service to the MS.

However, the cloud cell communication system has only been recently introduced so a data scheduling process for performing a handover procedure has not been concretely proposed.

Accordingly, there is a need for a data scheduling scheme which is appropriate to a situation of the cloud cell communication system, i.e., a communication situation on which a multiple BS cooperation scheme is used and in which normal data transmission/reception is possible.

The above information is presented as background information only to assist with an understanding of the present disclosure. No determination has been made, and no assertion is made, as to whether any of the above might be applicable as prior art with regard to the present disclosure.

### Disclosure

### Technical Problem

Aspects of the present disclosure are to address at least the above-mentioned problems and/or disadvantages and to provide at least the advantages described below. Accordingly, an aspect of the present disclosure is to propose an apparatus and method for scheduling data in a cloud cell communication system.

Another aspect of the present disclosure which is not subject to the claims is to propose an apparatus and method for scheduling data according to changing a master Base Station (BS) for a Mobile Station (MS) in a cloud cell communication system.

Another aspect of the present disclosure which is not subject to the claims is to propose an apparatus and method for scheduling data using an Inter-BS scheduling scheme according to changing a master BS for an MS in a cloud cell communication system.

### Technical Solution

The invention is defined in the claims.

The following aspects of the present disclosure are provided for illustrative purposes. In accordance with an aspect of the present disclosure, a method for scheduling data by a new master BS in a cloud cell communication system is provided. The method includes detecting that a master BS for a specific MS is changed from an old master BS to a new master BS, before a tunnel which is established between the new master BS and an access gateway is activated, receiving MS data which the old master BS receives through the tunnel which is established between the old master BS and the access gateway and buffers from the old master BS, and scheduling the received MS data.

In accordance with another aspect of the present disclosure, a method for scheduling data by an old master BS in a cloud cell communication system is provided. The method includes detecting that a master BS for a specific MS is changed from an old master BS to a new master BS, and, before a tunnel which is established between the new master BS and an access gateway is activated, transmitting MS data which the old master BS receives through a tunnel which is established between the old master BS and the access gateway and buffers to the new master BS.

In accordance with another aspect of the present disclosure, a method for transmitting/receiving data by an MS in a cloud cell communication system is provided. The method includes detecting that a master BS for an MS is changed from an old master BS to a new master BS, transmitting data to the new master BS, and receiving data from the new master BS, wherein the data which the MS transmits to the new master BS and receives from the new master BS is data which is generated by the new master BS, and the new master BS generates the data by scheduling MS data received through a tunnel which is established between the old master BS and an access gateway and buffered in the old master BS which the new master BS receives from the old master BS before a tunnel which is established between the new master BS and the access gateway is activated.

In accordance with another aspect of the present disclosure, a method for scheduling data by a new master BS in a cloud cell communication system is provided. The method includes detecting that a master BS for a specific MS is changed from an old master BS to a new master BS, detecting that a tunnel which is established between the new master BS and an access gateway is activated, receiving MS data from the tunnel which is established between the new master BS and the access gateway, and scheduling the received MS data.

In accordance with another aspect of the present disclosure, a method for scheduling data by an old master BS in a cloud cell communication system is provided. The method includes detecting that a master BS for a specific MS is changed from an old master BS to a new master BS, and before a tunnel which is established between the new master BS and an access gateway is activated, scheduling MS data which the old master BS receives through a tunnel which is established between the old master BS and the access gateway and buffers to the new master BS.

In accordance with another aspect of the present disclosure, a method for transmitting/receiving data by an MS in a cloud cell communication system is provided. The method includes detecting that a master BS for an MS is changed from an old master BS to a new master BS, transmitting data to the new master BS, and receiving data from the new master BS, wherein the data which the MS transmits to the new master BS and receives from the new master BS is data which is generated by the new master BS, and the new master BS generates the data by scheduling MS data received through a tunnel which is established between the new master BS and an access gateway after a tunnel which is established between the new master BS and the access gateway is activated.

In accordance with another aspect of the present disclosure, a method for scheduling data by an access gateway in a cloud cell communication system is provided. The method includes receiving a signal requesting activation for a tunnel which is established between a new master BS and an access gateway from the new master BS, and activating the tunnel which is established between the new master BS and the access gateway by switching a tunnel which is established between an old master BS and the access gateway to the tunnel which is established between the new master BS and the access gateway.

In accordance with another aspect of the present disclosure, a new master BS in a cloud cell communication system is provided. The new master BS includes a controller configured to detect that a master BS for a specific MS is changed from an old master BS to a new master BS, and a receiver configured to receive MS data which the old master BS receives through a tunnel which is established between the old master BS and an access gateway and buffers from the old master BS before the tunnel which is established between the new master BS and the access gateway is activated, wherein the controller schedules the received MS data.

In accordance with another aspect of the present disclosure, an old master BS in a cloud cell communication system is provided. The old master BS includes a controller configured to detect that a master BS for a specific MS is changed from an old master BS to a new master BS, and a transmitter configured to transmit MS data which the old master BS receives through a tunnel which is established between the old master BS and an access gateway and buffers to the new master BS before a tunnel which is established between the new master BS and the access gateway is activated.

In accordance with another aspect of the present disclosure, an MS in a cloud cell communication system is provided. The MS includes a controller configured to detect that a master BS for an MS is changed from an old master BS to a new master BS, a transmitter configured to transmit data to the new master BS, and a receiver configured to receive data from the new master BS, wherein the data which the MS transmits to the new master BS and receives from the new master BS is data which is generated by the new master BS, and the new master BS generates the data by scheduling MS data received through a tunnel which is established between the old master BS and an access gateway and buffered in the old master BS which the new master BS receives from the old master BS before a tunnel which is established between the new master BS and the access gateway is activated.

In accordance with another aspect of the present disclosure, a new master BS in a cloud cell communication system is provided. The new master BS includes a controller configured to detect that a master BS for a specific MS is changed from an old master BS to a new master BS and detecting that a tunnel which is established between the new master BS and an access gateway is activated, and a receiver configured to receive MS data from the tunnel which is established between the new master BS and the access gateway, wherein the controller schedules the received MS data.

In accordance with another aspect of the present disclosure, an old master BS in a cloud cell communication system is provided. The old master BS includes a controller configured to detect that a master BS for a specific MS is changed from an old master BS to a new master BS and to schedule MS data which the old master BS receives through a tunnel which is established between the old master BS and an access gateway and buffers to the new master BS before a tunnel which is established between the new master BS and the access gateway is activated.

In accordance with another aspect of the present disclosure, an MS in a cloud cell communication system is provided. The MS includes a controller configured to detect that a master BS for an MS is changed from an old master BS to a new master BS, a transmitter configured to transmit data to the new master BS, and a receiver configured to receive data from the new master BS, wherein the data which the MS transmits to the new master BS and receives from the new master BS is data which is generated by the new master BS, and the new master BS generates the data by scheduling MS data received through a tunnel which is established between the new master BS and an access gateway after a tunnel which is established between the new master BS and the access gateway is activated.

In accordance with another aspect of the present disclosure, an access gateway in a cloud cell communication system is provided. The access gateway includes a receiver configured to receive a signal requesting activation for a tunnel which is established between a new master BS and an access gateway from the new master BS, and a controller configured to activate the tunnel which is established between the new master BS and the access gateway by switching a tunnel which is established between an old master BS and the access gateway to the tunnel which is established between the new master BS and the access gateway.

Other aspects, advantages, and salient features of the disclosure will become apparent to those skilled in the art from the following detailed description, which, taken in conjunction with the annexed drawings, discloses various embodiments of the present disclosure.

### Advantageous Effects

As is apparent from the foregoing description, aspects of the present disclosure which are not subject to the claims enable a new master BS to prevent forwarding data which is buffered in an old master BS before a master BS is changed to all cloud cell member BSs within a cloud cell in a cloud cell communication system. So, aspects of the present disclosure which are not subject to the claims prevent latency increase and repetitive data forwarding which is unnecessarily performed through a front haul link among BSs.

### Description of Drawings

The above and other aspects, features, and advantages of certain embodiments of the present disclosure will be more apparent from the following description taken in conjunction with the accompanying drawings, in which:
FIG. 1 schematically illustrates a structure of a cloud cell communication system according to an embodiment of the present disclosure;
FIGS. 2a and 2b schematically illustrate a process for performing a cloud cell member Base Station (BS) update operation in a cloud cell communication system according to an embodiment of the present disclosure;
FIGS. 3a and 3b schematically illustrate a process for performing a master BS change operation in a cloud cell communication system according to an embodiment of the present disclosure;
FIGS. 4a and 4b schematically illustrate a process for performing a data scheduling operation which is performed between an old master BS and a new master BS according to master BS change in a cloud cell communication system according to a first embodiment of the present disclosure;
FIGS. 5a to 5c schematically illustrate a process for performing a data scheduling operation which is performed between an old master BS and a new master BS according to master BS change in FIGS. 4A and 4B according to an embodiment of the present disclosure;
FIGS. 6a and 6b schematically illustrate a process for performing a data scheduling operation which is performed between an old master BS and a new master BS according to master BS change in a cloud cell communication system according to a second embodiment of the present disclosure;
FIGS. 7a to 7c schematically illustrate a process for performing a data scheduling operation which is performed between an old master BS and a new master BS according to master BS change in FIGS. 6A and 6B according to an embodiment of the present disclosure;
FIG. 8 schematically illustrates an internal structure of a Mobile Station (MS) in a cloud cell communication system according to an embodiment of the present disclosure;
FIG. 9 schematically illustrates an internal structure of a master BS in a cloud cell communication system according to an embodiment of the present disclosure; and
FIG. 10 schematically illustrates an internal structure of a cloud cell member BS in a cloud cell communication system according to an embodiment of the present disclosure.

Throughout the drawings, it should be noted that like reference numbers are used to depict the same or similar elements, features, and structures.

### Mode for Invention

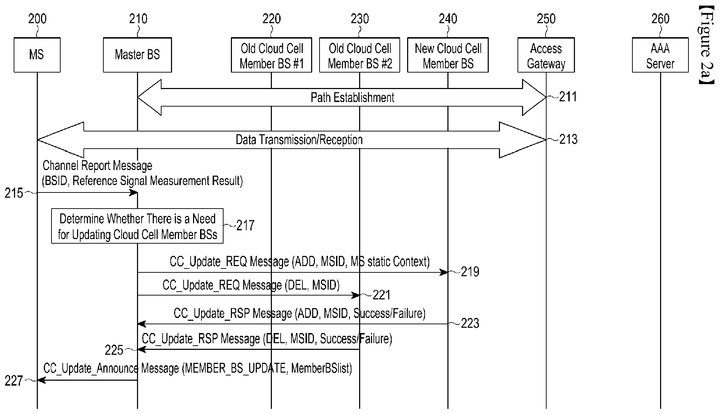

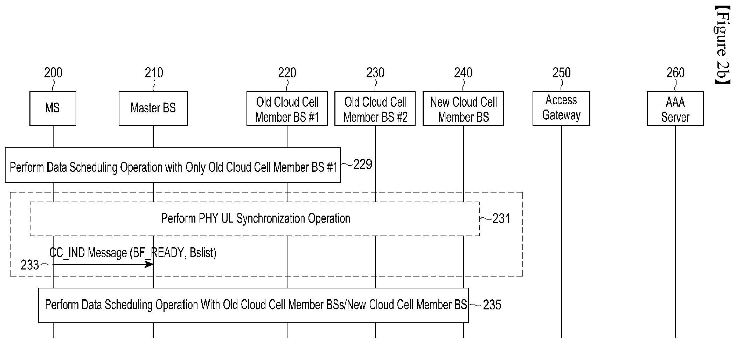

The following description with reference to the accompanying drawings is provided to assist in a comprehensive understanding of various embodiments of the present disclosure. It includes various specific details to assist in that understanding but these are to be regarded as merely exemplary. Accordingly, those of ordinary skill in the art will recognize that various changes and modifications of the various embodiments described herein can be made without departing from the scope of the disclosure. In addition, descriptions of well-known functions and constructions may be omitted for clarity and conciseness. In the following description, the invention as defined in the claims is described with reference to figures 2a and 2b. The other described embodiments are not subject to the claims and are provided for illustrative purposes.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The present disclosure proposes an apparatus and method for scheduling data in a cloud cell communication system.

The present disclosure proposes an apparatus and method for scheduling data according to a master Base Station (BS) change for a Mobile Station (MS) in a cloud cell communication system.

The present disclosure proposes an apparatus and method for scheduling data using an Inter-BS scheduling scheme according to a master BS change for an MS in a cloud cell communication system.

An apparatus and method for scheduling data proposed in the present disclosure may be applied to various mobile communication systems such as a High Speed Downlink Packet Access (HSDPA) mobile communication system, a High Speed Uplink Packet Access (HSUPA) mobile communication system, a Long-Term Evolution (LTE) mobile communication system, an LTE-Advanced (LTE-A) mobile communication system, a High Rate Packet Data (HRPD) mobile communication system proposed in a 3rd Generation Project Partnership 2 (3GPP2), and an Institute of Electrical and Electronics Engineers (IEEE) 802.16m mobile communication system.

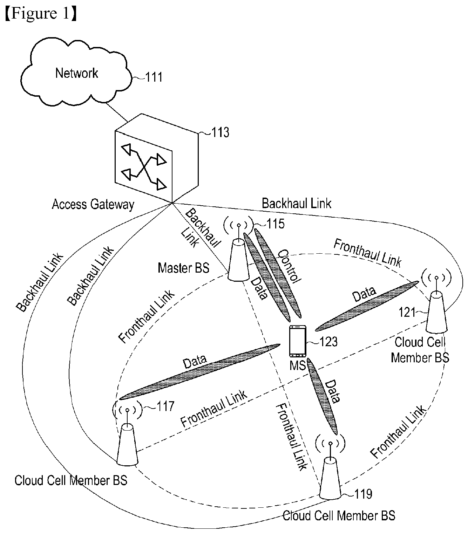

FIG. 1 schematically illustrates a structure of a cloud cell communication system according to an embodiment of the present disclosure.

Referring to FIG. 1, the cloud cell communication system includes a network 111, an access gateway 113, a master BS 115, cloud cell member BSs 117, 119, and 121, and an MS 123. A cloud cell member BS may be called as a slave BS. A cloud cell consists of the master BS 115 and the cloud cell member BSs 117, 119, and 121. BSs included in the cloud cell, i.e., the master BS 115 and the cloud cell member BSs 117, 119, and 121 provide data transmission for the MS 123 using a multiple BS cooperation scheme. The BSs included in the cloud cell share information on the MS 123, may simultaneously join data scheduling for the MS 123, or may join the data scheduling for the MS 123 after a time interval.

The master BS 115 performs a control signaling operation for the MS 123, and provides resource scheduling information of BSs which allocate DownLink (DL) and UpLink (UL) resources to the MS 123 among the BSs included in the cloud cell to the MS 123. The master BS 115 receives a measurement result for each reference signal transmitted from each neighbor BS from the MS 123, and updates information on BSs included in a cloud cell according to the measurement result. For example, the measurement result for the reference signal may be one of Channel Quality Information (CQI), a Signal to Interference and Noise Ratio (SINR), a Carrier to Interference and Noise Ratio (CINR), a Signal to Noise Ratio (SNR), and a Received Signal Strength Indication (RSSI), etc. The measurement result may be one of various formats other than the CQI, the SINR, the CINR, the SNR, and the RSSI.

The master BS 115 transmits update information for the BSs included in the cloud cell to the MS 123 and to each of the BSs included in the cloud cell. Each of the MS 123 and the BSs included in the cloud cell updates information on the BSs included in the cloud cell corresponding to the received update information.

In FIG. 1, the number of cloud cell member BSs is 3. That is, the cloud cell member BSs are cloud cell member BSs 117, 119, and 121. However, it will be understood by those of ordinary skill in the art that the number of cloud cell member BSs is not limited.

An embodiment of the present disclosure proposes an apparatus and method for scheduling data in a case that the master BS 115 for the MS 123 changes, the detailed description of the apparatus and method for scheduling the data will be followed, so a detailed description thereof will be omitted herein.

A case in which a data forwarding method occurs in a handover procedure for an MS in the cloud cell communication system in FIG. 1 using an LTE mobile communication system will be considered, and a detailed description will follow.

In the cloud cell communication system of FIG. 1, if an MS performs a handover procedure, not only a master BS but also other BSs included in a cloud cell, i.e., cloud cell member BSs should transmit data to the MS according to a link status. That is, in the cloud cell communication system, if the MS performs the handover procedure, a joint transmission situation or a dynamic point selection situation occurs. If the joint transmission situation or the dynamic point selection situation occurs, the master BS forwards data to be transmitted to the MS through a direct connection link between BSs to the cloud cell member BSs in order for the cloud cell member BSs to join data transmission. A detailed description of the joint transmission situation or the dynamic point selection situation will be omitted.

If a master BS is changed according to performing a handover procedure of an MS, a control right for the MS is transferred to a new master BS. In this case, the new master BS receives data from the old master BS and should forward the received data to a BS which joins data transmission with the new master BS if the described data forwarding operation occurs. If the new master BS rather than the old master BS forwards the data to cloud cell member BSs, latency may increase because the new master BS receives data and transmits the data to the cloud cell member BSs. So, an unnecessary data forwarding operation through a front haul link among BSs is repeated.

In an embodiment of the present disclosure, an apparatus and method for scheduling data in a cloud cell communication system are proposed in order to prevent an unnecessary data forwarding operation, a detailed description of which will follow.

In order to configure and update a cloud cell in the cloud cell communication system in FIG. 1, there is a need for a master BS change operation and a cloud cell member BS update operation. A detailed description of the master BS change operation and the cloud cell member BS update operation will follow.

### (1) master BS change operation

A master BS represents a BS which transmits control information within a cloud cell, e.g., MAP information, a signaling message, etc. Signaling among a master BS and cloud cell member BSs within the cloud cell is performed through a front haul link established among the master BS and the cloud cell member BSs. A BS which an MS initially access after power on automatically becomes a master BS, and the master BS for the MS may be changed based on various parameters such as a reference signal measurement result of the MS or traffic load of the master BS.

The master BS transmits data to an MS and receives data from the MS through a cooperative communication among cloud cell member BSs within a cloud cell. Various cooperative communication schemes such as transmission schemes used in a CoMP communication system, e.g., a joint transmission scheme, a joint processing scheme, a dynamic point selection scheme, etc. may be used in the cooperative communication. A detailed description of the joint transmission scheme, the joint processing scheme, and the dynamic point selection scheme will be omitted.

The master BS determines cloud cell member BSs included in a cloud cell based on a reference signal measurement result for neighbor BSs of the MS, and performs a cloud cell update operation through signaling with related cloud cell member BSs. Upon detecting that there is a need for changing a control point, i.e., a master BS for a specific MS, the master BS transfers a control right for the specific MS to a new master BS by performing a signaling transaction operation related to master BS change with cloud cell member BSs. That is, the master BS change means that any cloud cell member BS among cloud cell member BSs included in a cloud cell became a new master BS. In this case, an old master BS may become a cloud cell member BS for the specific MS, or may be deleted from a cloud cell for the specific MS. A detailed description for the case in which the old master BS is deleted from the cloud cell for the specific MS will be omitted.

### (2) cloud cell member BS update operation

A cloud cell member BS is included in a cloud cell for a specific MS, and represents a BS which joins a cooperative communication for data transmission/reception with the specific MS under a control of a master BS.

Generally, neighbor BSs for an MS are included in a cloud cell as cloud cell member BSs, and a detailed description will follow.

The MS reports a measurement result for a reference signal transmitted from each neighbor BS to a master BS, and the master BS performs procedures such as a capacity negotiation procedure with the neighbor BSs based on the measurement result received from the MS. The master BS selects neighbor BSs to be included in the cloud cell among the neighbor BSs and determines the selected neighbor BSs as cloud cell member BSs.

The operation for selecting the cloud cell member BSs is continuously performed based on a reference signal measurement result report for neighbor BSs of an MS, so cloud cell member BSs are updated. The cloud cell member BS update operation is continuously performed. The cloud cell member BS selection operation and the cloud cell member BS update operation may be performed based on a preset period or as necessary. Further, an arbitrary BS may operate as a master BS for a specific MS and may operate as a cloud cell member BS for other MSs.

A front haul link among BSs exists for operations necessary for cloud cell configuration and update, e.g., the master BS change operation and the cloud cell member BS update operation, and control information and DL data traffic are forwarded from a master BS to cloud cell member BSs through the front haul link.

Also, control information, feedback information and UL data traffic are forwarded from the cloud cell member BSs to the master BS through the front haul link.

FIGS. 2a and 2b schematically illustrate a process for performing a cloud cell member BS update operation in a cloud cell communication system according to an embodiment of the present disclosure.

Referring to FIGS. 2a and 2b, the cloud cell communication system includes an MS 200, a master BS 210, old cloud cell member BSs, i.e., a cloud cell member BS #1 220 and a cloud cell member BS #2 230, a new cloud cell member BS 240, an access gateway 250, and an Authorization, Authentication and Accounting (AAA) server 260.

A path is established between the master BS 210 and the access gateway 250 at operation 211. Data transmission/reception is performed between the MS 200 and the access gateway 250 at operation 213. In this status, the MS 200 transmits a measurement result for a reference signal received from each of neighbor BSs to the master BS 210 using a Channel Report message at operation 215. For example, the Channel Report message may include a BS Identifier (BSID) for each neighbor BS to which the MS 200 reports the measurement result, a measurement result for a reference signal transmitted from a related neighbor BS, etc. The measurement result for the reference signal may be Channel Quality Information (CQI) as a short-term measurement result, or one of an RSSI, a CINR, an SINR, an SNR, etc. as a long-term measurement result. The measurement result may be one of various formats other than the CQI, the RSSI, the CINR, the SINR, and the SNR.

The master BS 210 receiving the Channel Report message from the MS 200 determines whether there is a need for updating cloud cell member BSs included in a cloud cell using the measurement result for the reference signal included in the Channel Report message at operation 217. In FIGS. 2a and 2b, it will be assumed that the master BS 210 determines that there is the need for updating the cloud cell member BSs included in the cloud cell, and more specifically, determines to add the new cloud cell member BS 240 to the cloud cell and to delete the old cloud cell member BS #2 230 from the cloud cell. Although not shown in FIGS. 2a and 2b, it will be understood by those of ordinary skill in the art that a procedure related to a cloud cell member BS update operation to be described below is not performed if the master BS 210 determines that there is no need for updating the cloud cell member BSs included in the cloud cell.

The master BS 210 transmits a Cloud Cell Update REQuest (CC_Update_REQ) message to the new cloud cell member BS 240 at operation 219. The CC_Update_REQ message includes an ADD, an MSID, and an MS static Context. The MSID represents an MS Identifier (MSID), the ADD represents a parameter indicating that a related BS is added to a cloud cell for an MS with a related MSID as a cloud cell member BS, and the MS static Context represents a static context for the related MS. In FIGS. 2a and 2b, the MS static Context is included in the CC_Update_REQ message. However, the MS static Context may be only transmitted to a BS which operates as a cloud cell member BS for the MS 200 through a message other than the CC_Update_REQ message, e.g., a CC_Update_Announce message.

The master BS 210 transmits a CC_Update_REQ message to the old cloud cell member BS 230 at operation 221. The CC_Update_REQ message includes a DEL and an MSID. The DEL represents a parameter indicating that a related BS is deleted from a cloud cell for an MS with a related MSID. That is, the DEL represents a parameter indicating that the related BS which has been a cloud cell member BS is deleted from the cloud cell for the MS with the related MSID.

After receiving the CC_Update_REQ message, the new cloud cell member BS 240 determines whether the new cloud cell member BS 240 may operate as a cloud cell member BS for the MS 200, and transmits a Cloud Cell Update ReSPonse (CC_Update_RSP) message according to the determining result at operation 223. The CC_Update_RSP message transmitted from the new cloud cell member BS 240 to the master BS 210 includes an ADD, an MSID, and a Success or Failure. The Success represents a parameter indicating that a related BS will be added as a cloud cell member BS for an MS with the MSID, and the Failure represents a parameter indicating that the related BS will not be added as the cloud cell member BS for the MS with the MSID. In FIGS. 2a and 2b, it will be assumed that the Success is included into the CC_Update_RSP message transmitted from the new cloud cell member BS 240 to the master BS 210. That is, the new cloud cell member BS 240 will be added as a cloud cell member BS for the MS 200.

After receiving the CC_Update_REQ message, the cloud cell member BS #2 230 determines whether the cloud cell member BS #2 230 may be deleted from the cloud cell for the MS 200, and transmits a CC_Update_RSP message to the master BS 210 according to the determining result at operation 225. The CC_Update_RSP message transmitted from the cloud cell member BS #2 230 to the master BS 210 includes a DEL, an MSID, and a Success or Failure. The Success represents a parameter indicating that a related BS will be deleted from a cloud cell for an MS with the MSID, and the Failure represents a parameter indicating that the related BS will not be deleted from the cloud cell for the MS with the MSID. In FIGS. 2a and 2b, it will be assumed that the Success is included in the CC_Update_RSP message transmitted from the cloud cell member BS #2 230 to the master BS 210. That is, the cloud cell member BS #2 230 will be deleted from the cloud cell.

After receiving the CC_Update_RSP message from each of the new cloud cell member BS 240 and the cloud cell member BS #2 230, the master BS 210 detects a final cloud cell configuration result by analyzing the CC_Update_RSP message received from the each of the new cloud cell member BS 240 and the cloud cell member BS #2 230 and notifies the detected final cloud cell configuration result to the MS 200 using a CC_Update_Announce message at operation 227. The CC_Update_Announce message includes a MEMBER_BS_UPDATE and a MemberBSlist. The MEMBER_BS_UPDATE represents a parameter indicating that a cloud cell member BS has been updated, and the MemberBSlist represents a parameter indicating a cloud cell member BS list for the MS 200. That is, the MemberBSlist includes BSIDs of cloud cells for the MS 200.

After receiving the CC_Update_Announce message, the MS 200 detects the MEMBER_BS_UPDATE and the MemberBSlist from the CC_Update_Announce message and may know that the cloud cell member BS has been updated in a way in which the cloud cell member BS #2 230 has been deleted from the cloud cell for the MS 200 and the new cloud cell member BS 240 has been added to the cloud cell for the MS 200.

In a case that the MS 200 has not completed a PHYsical layer (PHY) UL synchronization operation for the new cloud cell member BS 240, the master BS 210 does not involve the new cloud cell member BS 240 in data scheduling for the MS 200, i.e., a cooperative communication and involves only the cloud cell member BS #1 220 as an old cloud cell member BS in the data scheduling for the MS 200 until the MS 200 completes the PHY UL synchronization operation with the new cloud cell member BS 240 at operation 229.

After completing the PHY UL synchronization operation with the new cloud cell member BS 240 at operation 231, the MS 200 transmits a Cloud Cell INDication (CC_IND) message to the master BS 210 at operation 233. If the cloud cell communication system uses a beam forming scheme, the MS 200 may select an optimal beam according to the completion of the PHY UL synchronization operation with the new cloud cell member BS 240. The CC_IND message includes a BF_READY and a Bslist. The BF_READY represents a parameter indicating that the MS 200 completed a beam selection operation with the new cloud cell member BS 240 if the cloud cell communication system uses the beam forming scheme, and the Bslist represents a list indicating all BSs for which the MS 200 completed the beam selection operation, i.e., which may transmit/receive data. As a result, the Bslist represents all BSs included in the cloud cell, that is, the Bslist includes a BSID of all of the BSs included in the cloud cell, so a BSID of the new cloud cell member BS 240 is included in the Bslist.

After receiving the CC_IND message from the MS 200, the master BS 210 involves the new cloud cell member BS 240 in the data scheduling for the MS 200 at operation 235. The new cloud cell member BS 240 does not have to be involved in the data scheduling for the MS 200, and is involved in the data scheduling for the MS 200 according to situation of the cloud cell communication system.

Operations 229 to 235 are performed because it will be assumed that the MS 200 should perform the PHY UL synchronization operation for all cloud cell member BSs included in the cloud cell in the cloud cell communication system. If the MS 200 performs the PHY UL synchronization operation for only the master BS 210 in the cloud cell communication system, that is, if the MS 200 transmits UL data and a UL control message to only the master BS 210, operations 229 to 235 do not have to be performed.

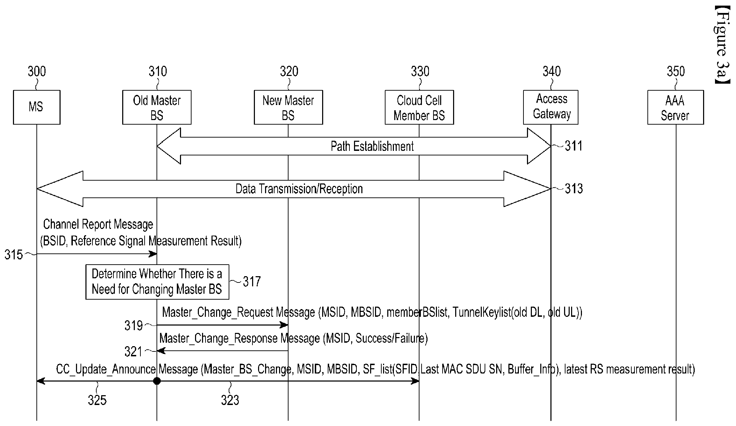

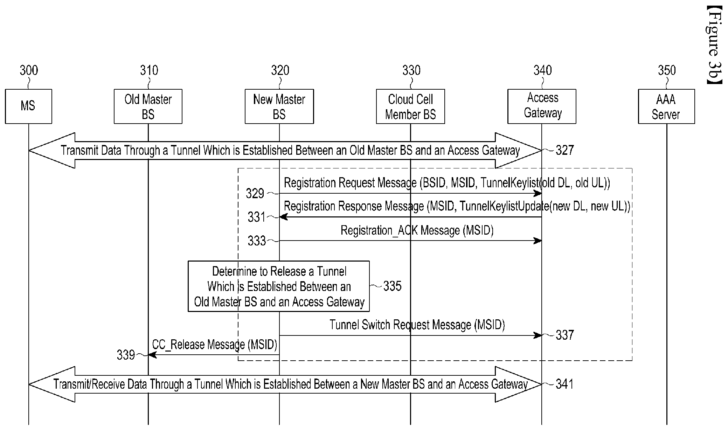

FIGS. 3a and 3b schematically illustrate a process for performing a master BS change operation in a cloud cell communication system according to an embodiment of the present disclosure.

Referring to FIGS. 3a and 3b, the cloud cell communication system includes an MS 300, an old master BS 310, a new master BS 320, a cloud cell member BS 330, an access gateway 340 and an AAA server 350.

A path is established between the old master BS 310 and the access gateway 340 at operation 311. Data transmission/reception is performed between the MS 300 and the access gateway 340 at operation 313. In this status, the MS 300 transmits a measurement result for a reference signal received from each of neighbor BSs to the old master BS 310 using a Channel Report message at operation 315. For example, the Channel Report message may include a BSID for each neighbor BS to which the MS 300 reports the measurement result, a measurement result for a reference signal transmitted from a related neighbor BS, etc. The measurement result for the reference signal may be one of various formats such as a CQI, a RSSI, a CINR, an SINR, and an SNR.

After receiving the Channel Report message from the MS 300, the old master BS 310 determines whether there is a need for changing a master BS based on the measurement result included in the Channel Report message at operation 317. In FIGS. 3a and 3b, it will be assumed that the old master BS 310 determines that there is a need for changing the master BS, and, more specifically, the old master BS 310 determines that the new master BS 320 is the master BS to be changed. Although not shown in FIGS. 3a and 3b, if the old master BS 310 determines that there is no need for changing the master BS, master BS change operation to be described below may be omitted.

After determining the master BS change, the old master BS 310 transmits a Master Change Request message to the new master BS 320 at operation 319. The Master Change_Request message includes an MSID, an MBSID, a memberBSlist, and a TunnelKeylist (old DL, old UL). The MSID represents an MSID of an MS for which a master BS should be changed, i.e., the MS 300, the MBSID (Master BSID) represents a BSID of a new master BS, i.e., the new master BS 320, the memberBSlist represents a cloud cell member list for the MS 300, and the TunnelKeylist (old DL, old UL) represents a tunnel key list used in a DL and a UL of an old master BS, i.e., the old master BS 310. The tunnel key is a key used in a tunnel established between the old master BS 310 and the access gateway 340, and the tunnel is generated per a service flow for the MS 300.

After receiving the Master_Change_Request message, the new master BS 320 transmits a Master_Change_Response message as a response message to the Master Change Request message to the old master BS 310 at operation 321. The Master Change_Response message includes an MSID, and a Success or Failure. The Success represents a parameter indicating that a related BS will be changed as a master BS for an MS with the MSID, and the Failure represents a parameter indicating that the related BS will not be changed as the master BS for the MS with the MSID. In FIGS. 3a and 3b, it will be assumed that the Success is included in the Master Change _Response message transmitted from the new master BS 320 to the old master BS 310. Meanwhile, only if operations 311 to 321 are completed, the new master BS 320 will be a new master BS, so it will be noted that the new master BS 320 has a name 'master BS'. However, the new master BS 320 is not a master BS before operation 321.

After receiving the Master Change _Response message, the old master BS 310 transmits a CC_Update_Announce message in order to notify that the new master BS 320 changed as a new master BS to the MS 300 and the cloud cell member BS 330 at operations 323 and 325. The CC_Update_Announce message transmitted to the MS 300 and the cloud cell member BS 330 includes a Master_BS_Change, an MSID, an MBSID, an SF_list (SFID, Last MAC SDU SN, Buffer Info), and a latest Reference Signal (RS) measurement result.

The Master_BS_Change is a type of CC_Update_Announce message, and a parameter indicating that a master BS has been changed. The SF_list is a parameter indicating a service flow list. The SF_list includes a Service Flow Identifier (SFID) indicating an ID of a service flow established for the MS 300, a Last MAC SDU SN indicating a Serial Number (SN) of a Medium Access Control (MAC) Service Data Unit (SDU) which has been lastly processed for a related service flow in the old master BS 310, and a Buffer_Info indicating buffer information. The latest RS measurement result is a parameter representing a measurement result which the MS 300 has transmitted lastly to the old master BS 310.

The Buffer Info represents the buffer information, i.e., the number of MAC SDUs which are currently buffered and a size of each of the MAC SDUs. The new master BS 320 may control data scheduling for the old master BS 310 based on the Buffer_Info. The Latest RS measurement Result may be used if the new master BS 320 determines a Modulation and Coding Scheme (MCS) which is appropriate to the data scheduling for the MS 300.

The new master BS 320 has not yet established a tunnel with the access gateway 340, and the access gateway 340 has not yet recognized that a master BS has been changed. So, the access gateway 340 continuously transmits data which the MS 300 should receive to the old master BS 310 at operation 327.

Because, there is a need for establishing a new tunnel between the new master BS 320 and the access gateway 340, the new master BS 320 transmits a Registration Request message to the access gateway 340 at operation 329. The Registration Request message includes a BSID, an MSID, and a TunnelKeylist (old DL, old UL). The BSID represents a BSID of the new master BS 320, and the TunnelKeylist (old DL, old UL) represents a tunnel key list for an old DL and an old UL used between the old master BS 310 and the access gateway 340. That is, the TunnelKeylist (old DL, old UL) includes tunnel keys for the old DL and the old UL used between the old master BS 310 and the access gateway 340.

After receiving the Registration Request message, the access gateway 340 transmits a Registration Response message as a response message to the Registration Request message to the new master BS 320 at operation 331. The Registration Response message includes an MSID and a TunnelKeylistUpdate (new DL, new UL). The TunnelKeylistUpdate (new DL, new UL) represents a tunnel key list for a new DL and a new UL which will be newly established between the new master BS 320 and the access gateway 340. That is, the TunnelKeylistUpdate (new DL, new UL) includes tunnel keys for the new DL and the new UL which will be newly established between the new master BS 320 and the access gateway 340.

After receiving the Registration Response message, the new master BS 320 transmits a Registration_ACK message to the access gateway 340 at operation 333. After transmitting the Registration_ACK message, the new master BS 320 determines release of the tunnel between the old master BS 310 and the access gateway 340 since there is no need for maintaining the tunnel between the old master BS 310 and the access gateway 340 at operation 335. The new master BS 320 transmits a Tunnel Switch Request message to the access gateway 340 at operation 337, and transmits a CC_Release message to the old master BS 310 at operation 339. After receiving the Tunnel Switch Request message, the access gateway 340 releases the tunnel established with the old master BS 310, and activates the tunnel established with the new master BS 320. That is, the tunnel established between the access gateway 340 and the new master BS 320 is activated if the new master BS 320 transmits the Tunnel Switch Request message to the access gateway 340.

Although not shown in FIGS. 3a and 3b, it will be understood by those of ordinary skill in the art that a process for transmitting/receiving a response message to the CC_Release message and a process for transmitting/receiving a response message to the Tunnel Switch Request message may be performed. Here, the response message to the CC_Release message and the response message to the Tunnel Switch Request message may be implemented as a Hybrid Automatic Retransmission reQuest (HARQ) ACK message or a new message, e.g., a CC_Release_RSP message and a Tunnel Switch Response message.

Thereafter, the MS 300, the new master BS 320 and the access gateway 340 transmit/receive data through the newly established tunnel at operation 341.

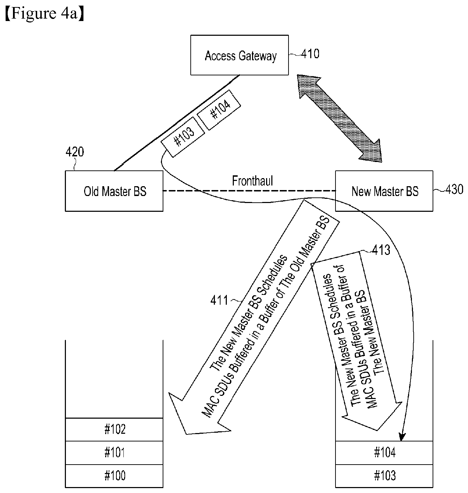

As described above, if a master BS change operation is performed in a cloud cell communication system, a data scheduling operation is performed between an old master BS and a new master BS. A process for performing a data scheduling operation proposed in various embodiments of the present disclosure will be described with reference to FIGS. 4a to 7c.

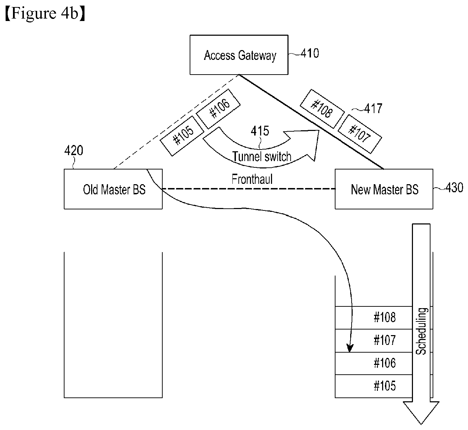

FIGS. 4a and 4b schematically illustrate a process for performing a data scheduling operation which is performed between an old master BS and a new master BS according to master BS change in a cloud cell communication system according to a first embodiment of the present disclosure.

Referring to FIGS. 4a and 4b, the cloud cell communication system includes an access gateway 410, an old master BS 420, and a new master BS 430. If a master BS is changed such that the old master BS 420 transmits a CC_Update_Announce message to the new master BS 430, the new master BS 430 has a control right for all cloud cell member BSs included in a cloud cell for an MS (not shown in FIGS. 4a and 4b). In this case, data which the MS will receive may be buffered in a buffer of the old master BS 420, so the new master BS 430 may know a quantity of the data buffered in the buffer of the old master BS 420 using a LAST MAC SDU SN and Buffer_Info included in the CC_Update_Announce message.

In the first embodiment, although a master BS is changed, the old master BS 420 does not forward all data, i.e., all MAC SDUs buffered in the buffer of the old master BS 420 to the new master BS 430 until a tunnel between the new master BS 430 and the access gateway 410 is activated. Accordingly, the old master BS 420 forwards only a MAC SDU received through a tunnel established between the access gateway 410 and the old master BS 420 to the new master BS 430 after a master BS is changed.

The new master BS 430 schedules MAC SDUs buffered in the buffer of the old master BS 420 at operation 411, and forwards scheduling control information for MAC SDUs buffered in the buffer of the old master BS 420 to all cloud cell member BSs within a cloud cell through a front haul link. At operation 411, the new master BS 430 forwards the scheduling control information to all cloud cell member BSs within the cloud cell. However, it will be understood by those of ordinary skill in the art that the new master BS 430 may forward the scheduling control information to some cloud cell member BSs within the cloud cell according to a selection of the new master BS 430. That is, the new master BS 430 may select some cloud cell member BSs within the cloud cell using a reference signal measurement result and various parameters such as a load of a related cloud cell member BS and forward the scheduling control information to the selected cloud cell member BSs.

After completing a process for the MAC SDUs buffered in the buffer of the old master BS 420, the new master BS 430 schedules MAC SDUs buffered in a buffer of the new master BS 430 at operation 413. The MS continuously reports a measurement result for neighbor BSs to the new master BS 430. The MS reports the measurement result for the neighbor BSs based on a preset period or as necessary. The measurement result may be one of various formats such as a CQI, a RSSI, a CINR, an SINR, and an SNR.

In FIG. 4a, a MAC SDU#100 to a MAC SDU#102 indicate MAC SDUs buffered in the buffer of the old master BS 420 before the master BS is changed, and a MAC SDU #103 to a MAC SDU #104 indicate MAC SDUs which are transmitted from the access gateway 410 to the old master BS 420 after the master BS is changed and forwarded to the new master BS 430.

If a tunnel between the new master BS 430 and the access gateway 410 is established and there is no MAC SDU buffered in the buffer of the old master BS 420, the new master BS 430 transmits a Tunnel Switch Request message to the access gateway 410 in order to receive a MAC SDU targeting the MS. According to transmission of the Tunnel Switch Request message, the tunnel established between the old master BS 420 and the access gateway 410 is switched to the tunnel established between the new master BS 430 and the access gateway 410 at operation 415. So, the tunnel established between the new master BS 430 and the access gateway 410 is activated.

At operation 415, the new master BS 430 transmits the Tunnel Switch Request message to the access gateway 410 if there is no MAC SDU buffered in the buffer of the old master BS 420. However, it will be understood by those of ordinary skill in the art that the new master BS 430 may transmit the Tunnel Switch Request message to the access gateway 410 after completing a registration process, i.e., a process for transmitting/receiving a Registration_REQ message and a Registration_RSP message. That is, normal data scheduling of the new master BS 430 is possible even if the new master BS 430 transmits the Tunnel Switch Request message on processing a MAC SDU buffered in the buffer of the old master BS 420.

After the tunnel established between the new master BS 430 and the access gateway 410 is activated, the new master BS 430 receives MAC SDUs from the access gateway 410 at operation 417.

In FIG. 4b, a MAC SDU#105 to a MAC SDU#106 indicate MAC SDUs which the old master BS 420 receives from the access gateway 410 and forwards to the new master BS 430 before the tunnel established between the new master BS 430 and the access gateway 410 after the master BS is changed. A MAC SDU #107 and a MAC SDU #108 indicate MAC SDUs which the new master BS 430 receives from the access gateway 410 through an activated tunnel between the new master BS 430 and the access gateway 410.

The new master BS 430 schedules MAC SDUs buffered in a buffer of the new master BS 430 regardless of whether the tunnel established between the new master BS 430 and the access gateway 410 is activated if transmission for MAC SDUs buffered in a buffer of the old master BS 420 is exhausted. In this case, the new master BS 430 may control cloud cell member BSs within a cloud cell to process a MAC SDU through a front haul link. Here, exhaustion of the MAC SDU transmission may mean completion of the MAC SDU transmission.

As described in FIGS. 4a and 4b, in a cloud cell communication system, even if an old master BS does not forward all data to a new master BS when a master BS is changed, the new master BS may prevent unnecessary latency by performing an Inter-BS scheduling operation.

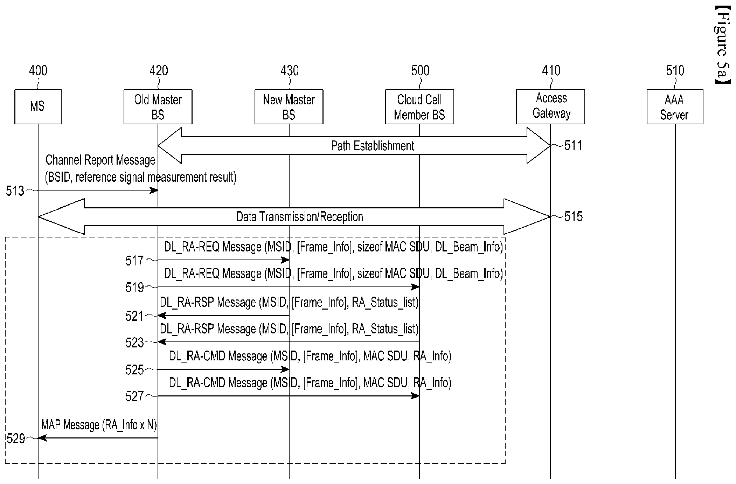

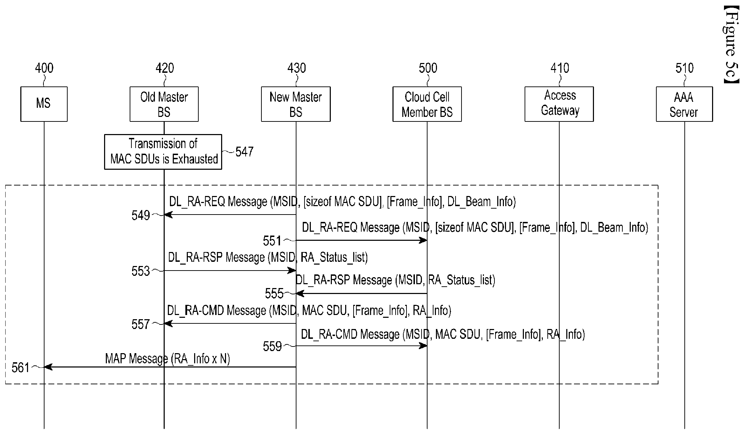

FIGS. 5a to 5c schematically illustrate a process for performing a data scheduling operation which is performed between an old master BS and a new master BS according to master BS change in FIGS. 4a and 4b according to an embodiment of the present disclosure.

Referring to FIGS. 5a to 5c, the cloud cell communication system includes an MS 400, an access gateway 410, an old master BS 420, a new master BS 430, a cloud cell member BS 500, and an AAA server 510.

A path is established between the old master BS 420 and the access gateway 410 at operation 511. The MS 400 reports a measurement result for a reference signal received from each of neighbor BSs to the old master BS 420 using a Channel Report message at operation 513. Data transmission/reception is performed between the MS 400 and the access gateway 410 at operation 515.

An Inter-BS scheduling operation performed by the old master BS 420 before a master BS is changed will be described with reference to operations 517 to 529.

The old master BS 420 determines to transmit data to the MS 400 through the new master BS 430 and the cloud cell member BS 500 among cloud cell member BSs within a cloud cell based on the measurement result included in the Channel Report message received from the MS 400. Accordingly, the old master BS 420 transmits a DL Resource Allocation REQuest (DL_RA-REQ) message to related BSs, i.e., the new master BS 430 and the cloud cell member BS 500 at operations 517 and 519. Here, it will be noted that the new master BS 430 has a name 'master BS', however the new master BS 430 is a cloud cell member BS, not a master BS.

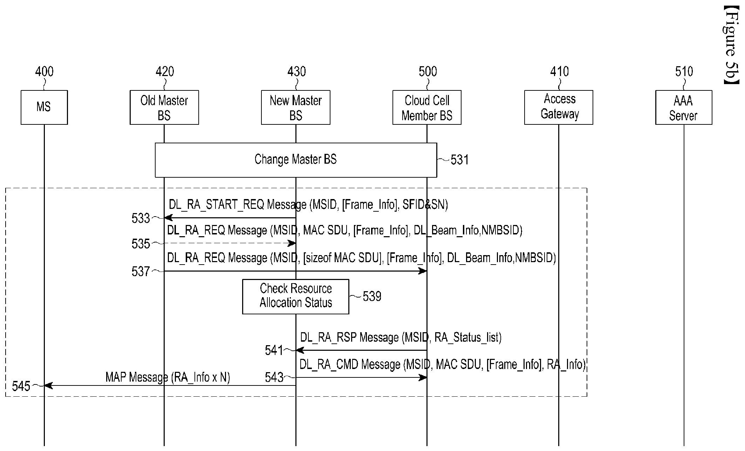

Even if each of the new master BS 430 and the cloud cell member BS 500 operate as a cloud cell member BS for the MS 400, each of the new master BS 430 and the cloud cell member BS 500 may operate as a master for other MSs (not shown in FIGS. 5a and 5b), so each of the new master BS 430 and the cloud cell member BS 500 has the capability of allocating resources to the other MSs. The old master BS 420 transmits a DL_RA-REQ message to each of the new master BS 430 and the cloud cell member BS 500 in order to detect a resource status for each of the new master BS 430 and the cloud cell member BS 500, i.e., in order to detect an available resource among resources which the new master BS 430 and the cloud cell member BS 500 schedule.

The DL_RA-REQ message includes an MSID, a Frame_Info, a sizeof MAC SDU, and a DL_Beam_Info. The sizeof MAC SDU is a parameter representing a size of a related MAC SDU, the Frame_Info is a parameter representing information on a frame on which a related MAC SDU is transmitted, and the DL_Beam_Info is a parameter representing information on a DL beam which each cloud cell member BS should use for transmitting data if the cloud cell communication system uses a beamforming scheme. The Frame_Info is a parameter which is optionally inserted, and may be included into the DL_RA-REQ message as necessary. The Frame_Info is an omittable parameter, so it will be noted that the Frame_Info is shown by a bracket in FIGS. 5a to 5c. The Frame_Info is omittable if a data scheduling timing point is predetermined. For example, if the DL_RA-REQ message is transmitted on a frame # n and data scheduling is performed on a frame #n+3, the Frame_Info is omittable.

After receiving the DL_RA-REQ message from the old master BS 420, each of the new master BS 430 and the cloud cell member BS 500 includes information on a candidate resource region through which each of the new master BS 430 and the cloud cell member BS 500 may transmit a MAC SDU corresponding to the sizeof MAC SDU into a DL Resource Allocation RESponse (DL_RA-RSP) message as a response message to the DL_RA-REQ message by determining resource allocation status, and transmits the DL_RA-RSP message to the old master BS 420 at operations 521 and 523. The DL_RA-RSP message includes an MSID, a Frame_Info, and an RA_Status_list. The RA_Status_list includes information on a candidate resource region through which a MAC SDU corresponding to a sizeof MAC SDU may be transmitted, i.e., a region ID of the candidate resource region. The Frame_Info may be included into the DL-RA-RSP message as necessary.

After receiving the DL_RA-RSP message from each of the new master BS 430 and the cloud cell member BS 500, the old master BS 420 determines a resource region to be used for transmitting data in each of the new master BS 430 and the cloud cell member BS 500 based on the RA_Status_list included in the DL_RA-RSP message. The old master BS 420 transmits a DL Resource Allocation CoMmanD (DL_RA-CMD) message including RA_Info as information on the determined resource region to each of the new master BS 430 and the cloud cell member BS 500 at operation 525 and 527. In FIGS. 5a to 5c, the old master BS 420 transmits the DL_RA-CMD message to each of the new master BS 430 and the cloud cell member BS 500. However, it will be understood by those of ordinary skill in the art that the old master BS 420 may transmit the DL_RA-CMD message to one of the new master BS 430 and the cloud cell member BS 500, or may not transmit the DL_RA-CMD message to all of the new master BS 430 and the cloud cell member BS 500. That is, the old master BS 420 does not transmit the DL_RA-CMD message to all BSs which join a negotiation for a cooperative communication, and does transmit the DL_RA-CMD message to only a necessary BS according to a situation of the cloud cell communication system. For example, the old master BS 420 may not involve a BS which has a load greater than or equal to a threshold load in data transmission for the MS 400 by considering load balancing. The threshold load may be appropriately set according to the situation of the cloud cell communication system, and a detailed description of the threshold load will be omitted. In order for the old master BS 420 to consider the load balancing, load status information for a related BS should be included into the DL_RA_RSP message.

The old master BS 420 transmits a MAP message including RA_Info as information on a resource region which is allocated to the MS 400 in each of the new master BS 430 and the cloud cell member BS 500 to the MS 400 at operation 529. At operation 529, the RA_Info is transmitted through the MAP message. However, it will be understood by those of ordinary skill in the art that the RA_Info may be transmitted through other messages as well as the MAP message.

In the Inter-BS scheduling operation of operations 517 to 529, the old master BS 420 provides the sizeof MAC SDU, and related cloud cell member BSs provide information on the resource region which is determined according to the sizeof MAC SDU to the old master BS 420.

However, it will be understood by those of ordinary skill in the art that the old master BS 420 does not provide the sizeof MAC SDU, related cloud cell member BSs provide resource allocation status information indicating which resource region is used and which resource region is idle to the old master BS 420, so the old master BS 420 may determine a resource region which related cloud cell member BSs will allocate for the MS 400.

If a master BS change operation is performed while the old master BS 420 transmits data to the MS 400 through the Inter-BS scheduling operation at operation 531, that is, if the old master BS 420 transmits the CC_Update_Announce message to the new master BS 430, a control right for the MS 400 is transferred from the old master BS 420 to the new master BS 430. In this case, the MAC SDU buffered in the buffer of the old master BS 420 is not forwarded to the new master BS 430. The new master BS 430 may know a quantity of MAC SDUs for the MS 400 buffered in the old master BS 420. Accordingly, the master BS 430 should perform a data scheduling operation for the MAC SDUs buffered in the buffer of the old master BS 420.

The new master BS 430 transmits a DL Resource Allocation START REQuest (DL_RA_START_REQ) message to the old master BS 420 in order to command the old master BS 420 to perform an Inter-BS scheduling operation with the new master BS 430 at operation 533. The DL_RA_START_REQ message includes an MSID, a Frame_Info, and an SFID&SN. The SFID is a parameter representing a service flow ID, and the SN is a parameter representing a Sequence Number (SN) for indicating a MAC SDU to be processed in a service flow mapping to the SFID. The Frame_Info may be included into the DL_RA_START_REQ message, or may not be included into the DL_RA_START_REQ message as necessary.

An operation after operation 533 is similar to an Inter-BS scheduling operation performed before a master BS is changed, so only a difference from the Inter-BS scheduling operation performed before the master BS is changed will be described below.

After receiving the DL_RA_START_REQ message from the new master BS 430, the old master BS 420 transmits a DL_RA_REQ message to each of the new master BS 430 and the cloud cell member BS 500 like a situation before master BS change at operations 535 and 537. A difference between the DL_RA_REQ message transmitted to the each of the new master BS 430 and the cloud cell member BS 500 before the master BS change and the DL_RA_REQ message transmitted to the each of the new master BS 430 and the cloud cell member BS 500 after the master BS change depends on whether the DL_RA_REQ message includes information on a new master BS to which cloud cell member BSs should transmit a DL_RA_RSP message, i.e., a New Master BSID (NMBSID). That is, the DL_RA_REQ message transmitted to the each of the new master BS 430 and the cloud cell member BS 500 before the master BS change does not include the NMBSID, and the DL_RA_REQ message transmitted to the each of the new master BS 430 and the cloud cell member BS 500 after the master BS change includes the NMBSID.

The DL RA REQ message transmitted from the old master BS 420 to the new master BS 430 includes a MAC SDU which will be transmitted to the MS 400 instead of a sizeof MAC SDU unlike the DL_RA_REQ message transmitted from the old master BS 420 to the cloud cell member BS 500. Here, the new master BS 430 includes the MAC SDU which will be transmitted to the MS 400 into the DL_RA_REQ message in order to facilitate transmission of a practical MAC SDU to appropriate cloud cell member BSs if the new master BS 430 transmits a DL_RA_CMD message to the appropriate cloud cell member BSs.

Since the new master BS 430 knows that the new master BS 430 is a master BS and resource allocation information for other cloud cell member BSs will be received, the new master BS 430 checks resource allocation status without transmitting a message at operation 539. The cloud cell member BS 500 transmits a DL_RA_RSP message to a BS corresponding to the NMBSID included in the DL_RA_REQ message, i.e., the new master BS 430 at operation 541. That is, the cloud cell member BS 500 transmits the DL_RA_RSP message to the new master BS 430 not the old master BS 420 which transmits the DL_RA-REQ message. An operation corresponding to operations 543 to 555 in FIGS. 5a and 5b is similar to an operation performed in the Inter-BS scheduling operation before the master BS change, so the detailed description will be omitted.

The new master BS 430 transmits a DL_RA_CMD message corresponding to resource allocation information of the new master BS 430 and resource allocation information of cloud cell member BSs, i.e., the old master BS 420 and the cloud cell member BS 500 to each of the old master BS 420 and the cloud cell member BS 500 at operations 557 and 559.

The new master BS 430 transmits a MAP message including RA_Info as information on a resource region which is allocated to the MS 400 in the each of the old master BS 420 and the cloud cell member BS 500 at operation 561.

As described above, the Inter-BS scheduling operation after the master BS change is implemented by a scheme in which scheduling for MAC SDUs buffered in the new master BS 430 starts after MAC SDUs for the MS 400 buffered in the old master BS 420 are exhausted according to data scheduling of the new master BS 430. The old master BS 420 does not have to become a cloud cell member BS for the MS 400. That is, it is determined whether the old master BS 420 will become the cloud cell member BS for the MS 400 corresponding to a measurement result for a reference signal of the MS 400.

In a case that the new master BS 430 may not determine whether the old master BS 420 will become a cloud cell member BS for the MS 400 using the measurement result, even if the old master BS 420 may not become a cloud cell member BS for the MS 400, the new master BS 430 may control the old master BS 420 through a front haul link. So, the old master BS 420 may still become a cloud cell member BS for the MS 400 as a need of the new master BS 430. The cloud cell member BS denotes a BS which transmits data to the MS and receives data from the MS with the new master BS 430 through air according to data scheduling of the new master BS 430. If it is impossible that the old master BS 420 transmits data to the MS 400 and receives data from the MS 400 with the new master BS 430, the old master BS 420 may not become a cloud cell member BS for the MS 400. Even if it is impossible that the old master BS 420 transmits data to the MS and receives data from the MS 400 with the new master BS 430 through the air, the old master BS 420 may become the cloud cell member BS for the MS 400 if the new master BS 430 may involve the old master BS 420 in data transmission/reception for the MS 400 through the front haul link. That is, even if the old master BS 420 may not transmit data to the MS 400 and receive data from the MS 400 through the air, the old master BS 420 may become the cloud cell member BS for the MS 400.

In order to prevent a case that the old master BS 420 which may not transmit data to the MS 400 and receive data from the MS 400 through the air becomes the cloud cell member BS for the MS 400, the old master BS 420 may not operate as the cloud cell member BS for the MS 400 if a BSID of the old master BS 420 is not included in the CC_Update_Announce message and the old master BS 420 receives a CC_Release message.

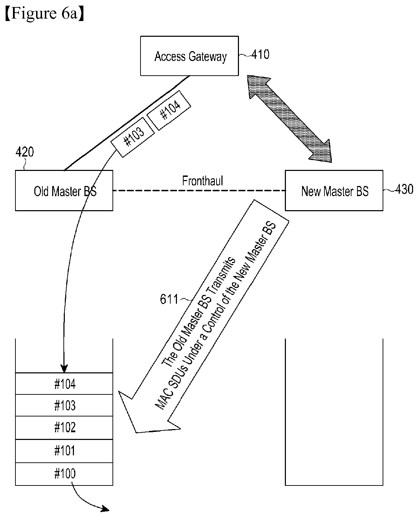

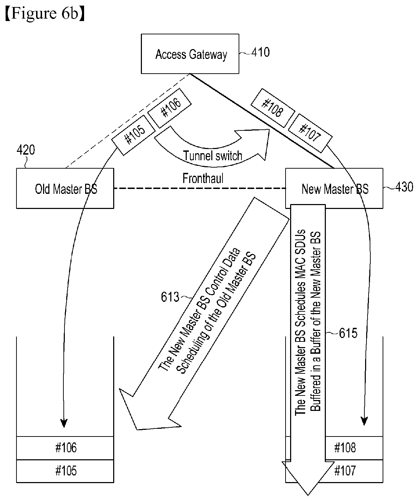

FIGS. 6a and 6b schematically illustrate a process for performing a data scheduling operation which is performed between an old master BS and a new master BS according to master BS change in a cloud cell communication system according to a second embodiment of the present disclosure.

Referring to FIGS. 6a and 6b, the cloud cell communication system includes an MS (not shown), an access gateway 410, an old master BS 420, and a new master BS 430.

In the second embodiment of the present disclosure, unlike the first embodiment of the present disclosure, the old master BS 420 continuously buffers MAC SDU received through the access gateway 410 in a buffer of the old master BS 420 without forwarding the MAC SDU received through the access gateway 410 to the new master BS 430 until a tunnel established between the access gateway 410 and the new master BS 430 is activated.

So, a MAC SDU is transmitted to the MS through the old master BS 420 according to a control operation between the old master BS 420 and the new master BS 430 until the tunnel established between the access gateway 410 and the new master BS 430 is activated at operation 611.

In FIG. 6a, a MAC SDU#100 to a MAC SDU#102 indicate MAC SDUs buffered in the buffer of the old master BS 420 before the master BS is changed, and a MAC SDU #103 to a MAC SDU #104 indicate MAC SDUs which are transmitted from the access gateway 410 to the old master BS 420 after the master BS is changed and transmitted to the MS according to a scheduling of the new master BS 430.

If the tunnel established between the access gateway 410 and the new master BS 430 is activated, the old master BS 420 may not receive a MAC SDU for the MS from the access gateway 410, so the new master BS 430 continuously controls data scheduling of the old master BS 420 at operation 613. Finally, if transmission for all MAC SDUs buffered in the buffer of the old master BS 420 is exhausted after the tunnel established between the access gateway 410 and the new master BS 430 is activated, the new master BS 430 performs a scheduling operation for MAC SDUs buffered in the buffer of the new master BS 430 at operation 615.

In FIG. 6b, a MAC SDU#105 to a MAC SDU#106 indicate MAC SDUs which the old master BS 420 receives from the access gateway 410 before the tunnel established between the new master BS 430 and the access gateway 410 after the master BS is changed. A MAC SDU #107 and a MAC SDU #108 indicate MAC SDUs which the new master BS 430 receives from the access gateway 410 through an activated tunnel between the new master BS 430 and the access gateway 410.

As described in FIGS. 6a and 6b, in a cloud cell communication system, even if an old master BS does not forward all data to a new master BS when a master BS is changed, the new master BS may prevent unnecessary latency by performing an Inter-BS scheduling operation.

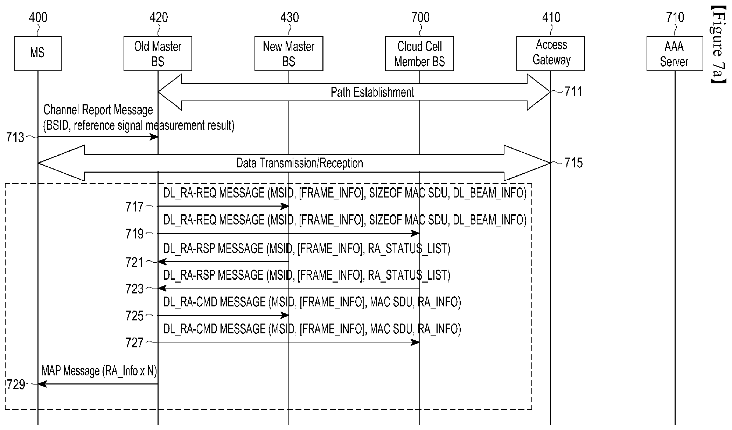

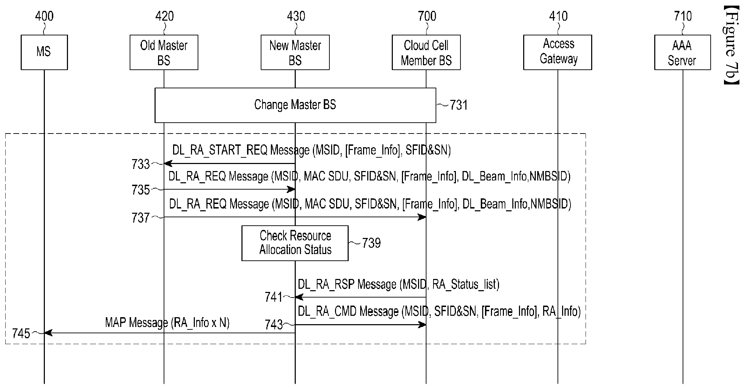

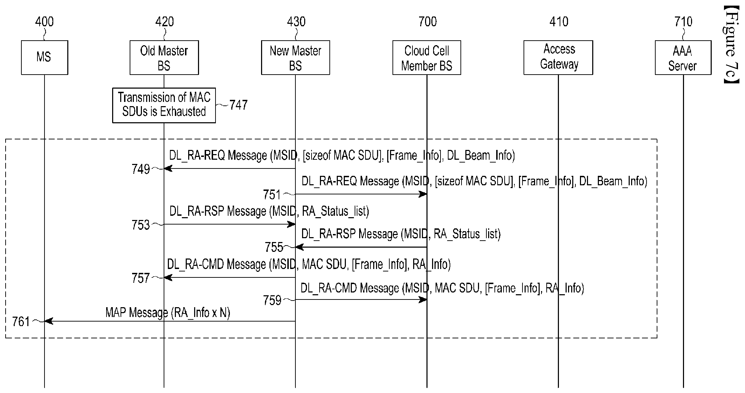

FIGS. 7a to 7c schematically illustrate a process for performing a data scheduling operation which is performed between an old master BS and a new master BS according to master BS change in FIGS. 6a and 6b according to an embodiment of the present disclosure.

Prior to a description of FIGS. 7a to 7c, it will be noted that an operation corresponding to the operations except for operations 735, 737, and 743 in FIGS. 7a to 7c is similar to an operation in FIGS. 5a to 5c, so a detailed description thereof will be omitted. That is, operations 511 to 533 in FIGS. 5a to 5c are substantially the same as operations 711 to 733 in FIGS. 7a to 7c, operations 539 to 541, 545 to 561 in FIGS. 5a to 5c are substantially the same as operations 739 to 741, 745 to 761 in FIGS. 7a to 7c, so a detailed description will be omitted.

Referring to FIGS. 7a to 7c, if a master BS is changed, an old master BS 420 transmits a DL_RA-REQ message including a MAC SDU and an SFID&SN indicating a related MAC SDU to a new master BS 430 and a cloud cell member BS 700 at operations 735 and 737.

If the new master BS 430 transmits a DL_RA_CMD message to related cloud cell member BSs in order to select a cloud cell member BS which will join data transmission for the MS 400, the DL_RA_CMD message includes only an SFID&SN indicating a related MAC SDU at operation 743. In FIGS. 7a to 7c, the related MAC SDU, the DL_RA_CMD message includes the SFID&SN. However, it will be understood by those of ordinary skill in the art that other parameters, not the SFID&SN, may be included in the DL_RA_CMD message in order for the new master BS 430 to indicate the related MAC SDU. Since a MAC SDU has been transmitted through a DL_RA-REQ message, the DL_RA_CMD may include only the SFID&SN.

The process for performing the data scheduling operation in FIGS. 7a to 7c may be applied to the first embodiment of the present disclosure as well as the second embodiment of the present disclosure. The reason is that an old master BS may transmit a DL-RA-REQ message including a MAC SDU to a new master BS and the new master BS may process the MAC SDU using an SFID&SN.

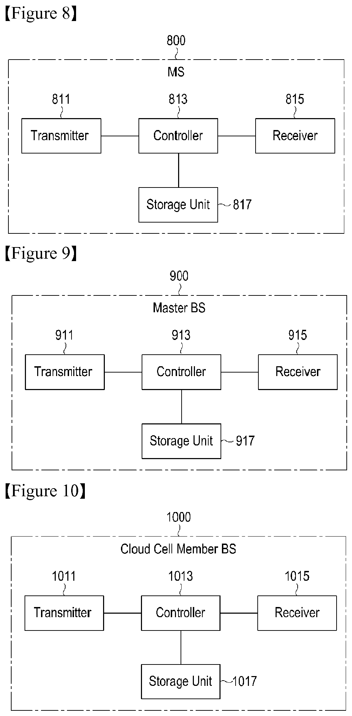

FIG. 8 schematically illustrates an internal structure of an MS in a cloud cell communication system according to an embodiment of the present disclosure.

Referring to FIG. 8, an MS 800 includes a transmitter 811, a controller 813, a receiver 815, and a storage unit 817.

The controller 813 controls the overall operation of the MS 800. In particular, the controller 813 controls the MS 800 to perform an operation related to a master BS change operation and a cloud cell member BS update operation. The operation related to the master BS change operation and the cloud cell member BS update operation are performed in the manner described before with reference to FIGS. 1 to 7c, so a detailed description thereof will be omitted herein.

The transmitter 811 transmits signals to a master BS and cloud cell member BSs under a control of the controller 813. The receiver 815 receives signals from the master BS and the cloud cell member BSs under a control of the controller 813.

The storage unit 817 stores a program and data related to the master BS change operation and the cloud cell member BS update operation. The storage unit 817 stores the signals which the receiver 815 has received from the master BS and the cloud cell member BSs.

While the transmitter 811, the controller 813, the receiver 815, and the storage unit 817 are shown in FIG. 8 as separate units, it is to be understood that this is for merely convenience of description. In other words, two or more of the transmitter 811, the controller 813, the receiver 815, and the storage unit 817 may be incorporated into a single unit.

FIG. 9 schematically illustrates an internal structure of a master BS in a cloud cell communication system according to an embodiment of the present disclosure.

Referring to FIG. 9, a master BS 900 includes a transmitter 911, a controller 913, a receiver 915, and a storage unit 917.

The controller 913 controls the overall operation of the master BS 900. In particular, the controller 913 controls the master BS 900 to perform an operation related to a master BS change operation and a cloud cell member BS update operation. The operation related to the master BS change operation and the cloud cell member BS update operation are performed in the manner described before with reference to FIGS. 1 to 7c, so a detailed description thereof will be omitted herein.

The transmitter 911 transmits signals to an MS and cloud cell member BSs under a control of the controller 913. The receiver 915 receives signals from the MS and the cloud cell member BSs under a control of the controller 913.

The storage unit 917 stores a program and data related to the master BS change operation and the cloud cell member BS update operation. The storage unit 917 stores the signals which the receiver 915 has received from the MS and the cloud cell member BSs.

While the transmitter 911, the controller 913, the receiver 915, and the storage unit 917 are shown in FIG. 9 as separate units, it is to be understood that this is for merely convenience of description. In other words, two or more of the transmitter 911, the controller 913, the receiver 915, and the storage unit 917 may be incorporated into a single unit.

FIG. 10 schematically illustrates an internal structure of a cloud cell member BS in a cloud cell communication system according to an embodiment of the present disclosure.

Referring to FIG. 10, a cloud cell member BS 1000 includes a transmitter 1011, a controller 1013, a receiver 1015, and a storage unit 1017.

The controller 1013 controls the overall operation of the cloud cell member BS 1000. In particular, the controller 1013 controls the cloud cell member BS 1000 to perform an operation related to a master BS change operation and a cloud cell member BS update operation. The operation related to the master BS change operation and the cloud cell member BS update operation are performed in the manner described before with reference to FIGS. 1 to 7c, so a detailed description thereof will be omitted herein.

The transmitter 1011 transmits signals to an MS and a master BS under a control of the controller 1013. The receiver 1015 receives signals from the MS and the master BS under a control of the controller 1013.

The storage unit 1017 stores a program and data related to the master BS change operation and the cloud cell member BS update operation. The storage unit 1017 stores the signals which the receiver 1015 has received from the MS and the master BS.

While the transmitter 1011, the controller 1013, the receiver 1015, and the storage unit 1017 are shown in FIG. 10 as separate units, it is to be understood that this is for merely convenience of description. In other words, two or more of the transmitter 1011, the controller 1013, the receiver 1015, and the storage unit 1017 may be incorporated into a single unit.

While the present disclosure has been shown and described with reference to various embodiments thereof, it will be understood by those skilled in the art that various changes in form and details may be made therein without departing from the scope of the present disclosure as defined by the appended claims.

## Claims

1. A method performed by a master base station, BS, (210) cooperating with at least one cloud cell member BS in a mobile communication system, the method comprising:
transmitting (219), to a cloud cell member BS (240), a cloud cell update request for addition of the cloud cell member BS (240) including capability information of a mobile station, MS (200);
receiving (223), from the cloud cell member BS (240), a cloud cell update response as a response to the cloud cell update request;
transmitting (227), to the MS (200), a CC_Update Announce message notifying a cloud cell configuration information and including a parameter indicating the cloud cell member BS has been updated and at least one cloud cell ID for the MS (200) based on the cloud cell update response of the cloud cell member BS (240); and performing (235) data scheduling for the MS (200) by involving the cloud cell member BS.

2. The method of claim 1, wherein the cloud cell configuration information for the MS (200) is generated based on a cloud cell update response message received from each of new cloud cell member BSs and old cloud cell member BSs.

3. A method performed by a cloud cell member base station, BS (240), cooperating with at least a master BS in a mobile communication system, the method comprising:
receiving (219), from a master BS (210), a cloud cell update request for addition of the cloud cell member BS (240) including capability information of a mobile station, MS (200); and
transmitting (223), to the master BS (210), a cloud cell update response as a response to the cloud cell update request; and
receiving (235) data from the master BS (210).

4. The method of claim 3, further comprising:
performing a synchronization operation with the MS (200).

5. A method performed by a mobile station, MS (200), in a mobile communication system including cooperating base stations, BSs, for a communication, the method comprising:
receiving (227), from a master BS (210), a Cloud Cell Update Announce message notifying a cloud cell configuration information and including a parameter indicating a cloud cell member BS has been updated and at least one cloud cell Id for the MS (200);
performing (231) a synchronization operation with the cloud cell member BS (240) corresponding to the cloud cell configuration information of the cloud cell member BS (240); and
receiving (235) data from the cloud cell member BS.

6. A master base station, BS (210), adapted to perform the method of claim 1 or claim 2.

7. A cloud cell base station, BS (240), adapted to perform the method of claim 3 or claim 4.

8. A mobile station, MS (200), adapted to perform the method of claim 5.

## Patentansprüche

1. Verfahren, das von einer Master-Basisstation, BS, (210) durchgeführt wird, die mit mindestens einer Cloud-Zellenmitglied-BS in einem Mobilkommunikationssystem kooperiert, wobei das Verfahren Folgendes umfasst:
Übertragen (219) einer Cloud-Zellen-Aktualisierungsanforderung zum Hinzufügen der Cloud-Zellenmitglied-BS (240) einschließlich Fähigkeitsinformationen einer Mobilstation, MS, (200) an eine Cloud-Zellenmitglied-BS (240);
Empfangen (223) einer Cloud-Zellen-Aktualisierungsantwort als Antwort auf die Cloud-Zellen-Aktualisierungsanforderung, von der Cloud-Zellenmitglied-BS (240);
Übertragen (227) einer CC_Update-Announce-Nachricht, an die MS (200), die eine Cloud-Zellen-Konfigurationsinformation benachrichtigt und einen Parameter enthält, der angibt, dass die Cloud-Zellenmitglied-BS aktualisiert wurde, und mindestens eine Cloud-Zellen-ID für die MS (200) basierend auf der Cloud-Zellen-Aktualisierungsantwort der Cloud-Zellenmitglied-BS (240); und Durchführen (235) einer Datenplanung für die MS (200) unter Einbeziehung der Cloud-Zellenmitglied-BS.

2. Verfahren nach Anspruch 1, wobei die Cloud-Zellen-Konfigurationsinformationen für die MS (200) basierend auf einer Cloud-Zellen-Aktualisierungsantwortnachricht erzeugt werden, die von jeder der neuen Cloud-Zellenmitglied-BSs und alten Cloud-Zellenmitglied-BSs empfangen wird.

3. Verfahren, das von einer Cloud-Zellenmitglied-Basisstation, BS (240), durchgeführt wird und mit mindestens einer Master-BS in einem Mobilkommunikationssystem zusammenarbeitet, wobei das Verfahren Folgendes umfasst:
Empfangen (219) einer Cloud-Zellen-Aktualisierungsanforderung zum Hinzufügen der Cloud-Zellenmitglied-BS (240) einschließlich Fähigkeitsinformationen einer Mobilstation, MS, (200) von einer Master-BS (210); und
Übertragen (223) einer Cloud-Zellen-Aktualisierungsantwort als Antwort auf die Cloud-Zellen-Aktualisierungsanforderung, an die Master-BS (210); und
Empfangen (235) von Daten von der Master-BS (210).

4. Verfahren nach Anspruch 3, ferner umfassend:
Durchführen einer Synchronisationsoperation mit der MS (200).

5. Verfahren, das von einer Mobilstation, MS, (200) in einem Mobilkommunikationssystem einschließlich zusammenarbeitender Basisstationen, BSs, für eine Kommunikation durchgeführt wird, wobei das Verfahren Folgendes umfasst:
Empfangen (227) einer Cloud-Zellen-Update-Announce-Nachricht von einer Master-BS (210), die eine Cloud-Zellen-Konfigurationsinformation benachrichtigt und einen Parameter enthält, der angibt, dass die Cloud-Zellenmitglied-BS aktualisiert wurde, und mindestens eine Cloud-Zellen-ID für die MS (200);
Durchführen (231) einer Synchronisationsoperation mit der Cloud-Zellenmitglied-BS (240) entsprechend der Cloud-Zellen-Konfigurationsinformation der Cloud-Zellenmitglied-BS (240); und
Empfangen (235) von Daten von der Cloud-Zellenmitglied-BS.

6. Master-Basisstation, BS, (210), die geeignet ist, das Verfahren nach Anspruch 1 oder Anspruch 2 durchzuführen.

7. Cloud-Zellenbasisstation, BS, (240), die geeignet ist, das Verfahren nach Anspruch 3 oder Anspruch 4 durchzuführen.

8. Mobilstation, MS, (200), die geeignet ist, das Verfahren nach Anspruch 5 durchzuführen.

## Revendications

1. Procédé mis en œuvre par une station de base, BS, maître (210) coopérant au moins avec une BS membre de cellule en nuage dans un système de communication mobile, le procédé comprenant :
transmettre (219), à une BS membre de cellule en nuage (240), une demande de mise à jour de cellule en nuage pour l'ajout de la BS membre de cellule en nuage (240) incluant des informations de capacité d'une station mobile, MS (200) ;
recevoir (223), à partir de la BS membre de cellule en nuage (240), une réponse de mise à jour de cellule en nuage en tant que réponse à la demande de mise à jour de cellule en nuage ;
transmettre (227), à la MS (200), un message d'avis de mise à jour de la cellule en nuage (CC_Update Announce) notifiant des informations de configuration de cellule en nuage et incluant un paramètre indiquant que la BS membre de cellule en nuage a été mise à jour et au moins un ID de cellule en nuage pour la MS (200) sur la base de la réponse de mise à jour de cellule en nuage de la BS membre de cellule en nuage (240) ; et effectuer (235) une planification de données pour la MS (200) en impliquant la BS membre de cellule en nuage.

2. Procédé selon la revendication 1, où les informations de configuration de cellule en nuage pour la MS (200) sont générées sur la base d'un message de réponse de mise à jour de cellule en nuage reçu à partir de chacune des nouvelles BS membre de cellule en nuage et des anciennes BS membre de cellule en nuage.

3. Procédé mis en œuvre par une station de base, BS, membre de cellule en nuage (240) coopérant avec au moins une BS maître dans un système de communication mobile, le procédé comprenant :
recevoir (219), à partir d'une BS maître (210), une demande de mise à jour de cellule en nuage pour l'ajout de la BS membre de cellule en nuage (240) incluant des informations de capacité d'une station mobile, MS (200) ; et
transmettre (223), à la BS maître (210), une réponse de mise à jour de cellule en nuage en tant que réponse à la demande de mise à jour de cellule en nuage ; et
recevoir (235) des données à partir de la BS maître (210).

4. Procédé selon la revendication 3, comprenant en outre :
la réalisation d'une opération de synchronisation avec la MS (200).

5. Procédé mis en œuvre par une station mobile, MS (200), dans un système de communication mobile incluant des stations de base, BS, coopérantes pour une communication, le procédé comprenant :
recevoir (227), à partir d'une BS maître (210), un message d'avis de mise à jour de cellule en nuage notifiant des informations de configuration de cellule en nuage et incluant un paramètre indiquant qu'une BS membre de cellule en nuage a été mise à jour et au moins un Id de cellule en nuage pour la MS (200) ;
effectuer (231) une opération de synchronisation avec la BS membre de cellule en nuage (240) correspondant aux informations de configuration de cellule en nuage de la BS membre de cellule en nuage (240) ; et
recevoir (235) des données de la BS membre de cellule en nuage.

6. Station de base maître, BS (210), adaptée pour mettre en œuvre le procédé selon la revendication 1 ou la revendication 2.

7. Station de base de cellule en nuage, BS (240), adaptée pour mettre en œuvre le procédé selon la revendication 3 ou la revendication 4.

8. Station mobile, MS (200), adaptée pour mettre en œuvre le procédé selon la revendication 5.
